# EUROPÄISCHE PATENTANMELDUNG

(11) **EP 3 964 388 A1**
(43) Veröffentlichungstag der Anmeldung: **09.03.2022**
(21) Anmeldenummer: 21193689.3
(22) Anmeldetag: 30.08.2021
(51) Int. Cl.: B60N 2/58, B60N 2/879

(54) **GESTÜHL MIT AKTUATOREN ZUR BESCHALLUNG**

(30) Priorität: 02.09.2020 DE 102020211092; 06.05.2021 DE 102021204590
(71) Anmelder: Continental Engineering Services GmbH, 60489 Frankfurt (DE)
(72) Erfinder: Kerkmann, Johannes, 60488 Frankfurt am Main (DE); Patsouras, Dimitrios, 60488 Frankfurt am Main (DE); Neubauer, Philipp, 60488 Frankfurt am Main (DE); Moritz, Karsten, 60488 Frankfurt am Main (DE); Joest, Robert, 60488 Frankfurt am Main (DE); Eisele, Stephan, 60488 Frankfurt am Main (DE); Köhler, Pascal, 60488 Frankfurt am Main (DE); Wick, Robert, 60488 Frankfurt am Main (DE); Friedrich, Jens, 60488 Frankfurt am Main (DE); Walther, Christian, 60488 Frankfurt am Main (DE)
(74) Vertreter: Continental Corporation

(57) **Zusammenfassung**

Beschallungsanordnung, aufweisend ein Gestühl, das eine Lehnfläche (3) und eine Kopfstützfläche (4) aufweist, wobei die Beschallungsanordnung wenigstens einen ersten und einen zweiten Aktuator (1, 2) zur Schwingungsanregung aufweist, wobei jeder der beiden Aktuatoren (1, 2) in dem Gestühl angeordnet ist, so dass der erste und der zweite Aktuator (1, 2) jeweils mit seiner Anregefläche an der Innenseite einer Bespannung (6) der Kopfstützfläche (4) oder der Innenseite einer Bespannung der Lehnfläche (3) auf im Wesentlichen gleicher Höhe (5) angeordnet ist.

## Beschreibung

Die Erfindung betrifft eine Beschallungsanordnung, aufweisend ein Gestühl, das zwei Schallerzeugungseinheiten umfasst.

Der Erfindung liegt die Aufgabe zu Grunde, eine Beschallungsanordnung, aufweisend ein Gestühl, vorzuschlagen, mit welcher eine verbesserte und/oder kostengünstigere und/oder effizientere und/oder effektivere Beschallung erfolgen kann.

Diese Aufgabe wird erfindungsgemäß gelöst durch die Beschallungsanordnung gemäß Anspruch 1.

Bevorzugt weist der erste und der zweite Aktuator jeweils einen elektrischen Antrieb zur Wandlung elektrischer Signale in mechanische Auslenkungen bzw. mechanische Schwingungen auf, wobei der Antrieb eine Spule aufweist, durch welche der Strom des elektrischen Signals fließen kann bzw. fließt und einen Permanentmagneten aufweist, welcher mit der Spule in elektromagnetischer Wechselwirkung stehen kann bzw. steht,
des Weiteren weist der Aktuator ein Gehäuse mit einer Anregefläche oder ein Gehäuse und eine Anregefläche auf, wobei das Gehäuse und/oder die Anregefläche durch den elektrischen Antrieb mechanisch ausgelenkt und/oder mechanisch zu Schwingungen angeregt werden kann.

Die elektrischen Signale durch die Spule weisen zweckmäßigerweise die Informationen des abzustrahlenden Schallsignals bzw. des Nutzsignals auf, insbesondere eines Musiksignals und/oder Sprachsignals.

Es ist bevorzugt, dass der erste und der zweite Aktuator ausgelegt bzw. ausgebildet sind, akustischen Schall abzustrahlen, und/oder dass der erste und der zweite Aktuator ausgebildet sind, dass der Aktuator seine Anregefläche und damit einen verbundenen Körper zu Schwingungen seiner Körperstruktur anregt bzw. anregen kann, wodurch der von Luft zumindest teilweise umgebene Körper Schallwellen emittiert.

Die Beschallungsanordnung sind bevorzugt zur Nutzung in Kraftfahrzeugen, insbesondere Automobilen oder Bussen, ausgebildet, alternativ vorzugsweise zur Nutzung in Flugzeugen oder Schiffen/Booten.

Das Gestühl ist bevorzugt als Fahrzeugsitz bzw. Fahrzeugstuhl ausgebildet, insbesondere als Kraftfahrzeugsitz oder Flugzeugsitz, alternativ vorzugsweise als Liege.

Die Flächen der Lehnfläche und Kopfstützfläche und insbesondere der Sitzfläche, können vorzugsweise ineinander übergehend ausgebildet sein, daher sind diese Flächen besonders bevorzugt nicht klar getrennt, sondern eher Bereiche, die zur Aufnahme, zum Anlehnen der entsprechenden Körperpartien vorgesehen sind.

Bevorzugt sind der erste und der zweite Aktuator bzw. deren Anregeflächen im Wesentlichen parallel ausgerichtet oder alternativ vorzugsweise ist wenigstens einer der Aktuatoren bezüglich des anderen Aktuators angewinkelt positioniert, insbesondere bei einer gewölbten Lehnfläche bzw. Kopfstützfläche.

Die Anregefläche ist vorzugsweise direkt an der Bespannung positioniert und/oder direkt mit dieser verbunden.

Es ist bevorzugt, dass die Anregefläche mittels eines dazwischen angeordneten Transferelements an der Bespannung positioniert ist und/oder mit der Bespannung verbunden ist.

Es ist zweckmäßig, dass die Aktuatoren jeweils im Wesentlichen normal zur Bespannungsfläche ausgerichtet angeordnet sind, wobei die Bespannungsfläche insbesondere gewölbt ausgebildet ist.

Vorzugsweise ist die Beschallungsanordnung so ausgebildet, dass das Gestühl einen zusätzlichen Bassaktuator aufweist, insbesondere ausgebildet zur Wiedergabe/Anregung von Frequenzen im Wesentlichen kleiner als 200Hz bzw. kleiner als 100Hz bzw. kleiner als 80Hz und dieser zusätzliche Bassaktuator an der Innenseite der Bespannung der Lehnfläche oder an der Innenseite der Bespannung einer Sitzfläche oder an der Gestühlstruktur im Bereich der Sitzfläche oder Lehnfläche angeordnet ist.

Es ist bevorzugt, dass die Aktuatoren jeweils an ihrer der Anregefläche abgewandten Rückseite einen offenen Rahmen aufweisen, welcher den Aktuator beabstandet umschließt und rückseitig überragt, und welcher biegsam und/oder verformbar ausgebildet ist und/oder Gelenke aufweist.

Es ist zweckmäßig, dass der Rahmen aus Streben ausgebildet ist und in Richtung normal zu Anregefläche verformbar ausgebildet ist und außerdem senkrecht dazu ebenfalls verformbar ausgebildet ist.

Vorzugsweise ist die Beschallungsanordnung so ausgebildet, dass die Aktuatoren jeweils, insbesondere jeweils den Rahmen aufweisend, in einem flexiblen Füllmaterial, insbesondere ein Kunststoffschaum, in dem Gestühl gelagert/ locker gelagert sind und jeweils vorne, auf Seiten der Anregefläche des Aktuators mit Transferelement und/oder mit der Bespannung verbunden sind.

Die Beschallungsanordnung ermöglicht vorzugsweise ein besonders intensives und/oder direktes und/oder räumliches Klangerlebnis.

Das Transferelement ist bevorzugt so ausgebildet, dass es sowohl in seiner Form als auch in seinen mechanischen Schwingungseigenschaften, beispielsweise hinsichtlich seiner Masse und/oder Steifigkeit und/oder Dämpfung, so ausgelegt ist, dass das Transferelement insbesondere als Impedanzwandler agiert. Es findet somit eine verbesserte Übertragung der Schwingungen vom Aktuator auf die membranähnliche Bespannung der Kopfstützfläche und/oder Lehnfläche statt.

Es ist bevorzugt, dass der Rahmen bzw. offene Rahmen wenigstens eines Aktuators bzw. beider Aktuatoren so ausgebildet ist, um die rückseitige Freigängigkeit des Aktuators sicherzustellen, wobei die Steifigkeit des Rahmens so ausgelegt ist, dass er sich bei einem Crash elastisch und/oder plastisch verformt bzw. verformen kann und so einen maximalen Insassenschutz sicherstellt.

Die Vorteile er Beschallungsanordnung bestehen vorzugsweise aus einem oder mehreren der folgenden Punkte:
- Im Vergleich zu Lautsprecher-basierten Systemen strahlen Aktuator-basierte Systeme aufgrund der großflächigen Schallabstrahlung über die gesamte Oberfläche des Sitzes/der Kopfstütze deutlich tiefere Frequenzen ab. Active Noise Cancellation Systeme (ANC) können dadurch besser umgesetzt werden als mit herkömmlichen Lautsprechern, da deren Regelalgorithmen bisher maßgeblich tieffrequent Wirkung zeigen.
- Aktuator-basierte Systeme sind erheblich kleiner und leichter als vergleichbare Lautsprecher-basierte Systeme.
- Durch den geringeren Bauteilaufwand sind Aktuator-basierte Schallerzeugungssysteme kostengünstiger als vergleichbare Lautsprechersysteme.
- Durch die minimale Entfernung zum Ohr der zu beschallenden Person befindet diese sich im akustischen Nahfeld der Schallabstrahlung und nimmt daher den Schall besonders direkt und auch bis hin zu sehr tiefen, abgestrahlten Frequenzen wahr. Andere Fahrzeuginsassen befinden sich durch die größere Entfernung im akustischen Fernfeld, wodurch sie den Schall deutlich weniger intensiv wahrnehmen. Im Gegensatz zu Lautsprecher-basierten Systemen befindet sich die Schallquelle bei Aktuator-basierten System deutlich näher am Ohr, weswegen der Effekt des akustischen Nahfeldes stärker hervortritt.
- Durch die Anbindung der Aktuatoren an die Oberfläche des Sitzes/der Kopfstütze ist das Aktuator-basierte schallerzeugende System praktisch unsichtbar und benötigt - im Gegensatz zu Lautsprecherbasierten Systemen - keine Schlitze oder Perforationen in der Oberfläche.

Die elektrische Anbindung der Aktuatoren erfolgt bevorzugt unsichtbar mittels Verlegung der Kabel in der Kopfstützenstrebe, im Gestühl bzw. dem Sitz oder in der Liege.

Das Transferelement ist bevorzugt bespannungsseitig geometrisch ideal an die Kontur der Bespannung angepasst, um nach außen hin optisch unsichtbar zu sein. Technisch dient das Transferelement zweckmäßigerweise als mechanischer Impedanzwandler zwischen dem Aktuator und der membranartigen Bespannung, um eine maximal effiziente Übertragung der Schwingungen vom Aktuator auf die Bespannung als Membran zu gewährleisten, um von der Bespannung/ Membran als Luftschall lokal abgestrahlt zu werden. Dabei wird insbesondere sowohl die Geometrie als auch das Material des Transferelementes so gewählt, dass die Impedanzanpassung im Wesentlichen bestmöglich ist. Der Elastizitätsmodul des verwendeten Werkstoffes kann insbesondere im Bereich zwischen 200 N/mm² und 80000 N/mm² variieren. Bevorzugt ist das Transferelement so ausgebildet, dass im Bereich einer möglichen direkten Berührung einer Person das Transferelement besonders elastisch ausgeformt wird und der Steifigkeit der angrenzen Materialen angeglichen wird, beispielsweise durch eine besonders ausgedünnte Formgebung. Die Dicke des Transferelementes kann vorzugsweise zwischen 0,3 mm und 5 mm variieren, wobei die Dicke ausdrücklich über die Ausdehnung des Transferelementes schwanken kann. Zu den Randbereichen findet besonders bevorzugt eine Ausdünnung der Transferelemente statt. Der Übergang vom dickeren Innenbereich zum dünneren Außenbereich kann auf Basis linearer, quadratischer oder exponentieller Funktionen ausgeführt sein. Es können auch Werkstoffe mit anisotropem Verhalten eingesetzt werden. Die flächigen Ausmaße der Transferelemente können bevorzugt bis zu 30% der Fläche des Sitzes/der Kopfstütze ausmachen, welche in Richtung der zu beschallenden Person oder in eine Richtung, bei der durch eine Reflexion, z. B. an Glasscheiben, die Person erreicht wird, zeigen.

Die Verbindung zwischen Transferelement und Bespannung erfolgt bevorzugt durch eine Klebeverbindung, um eine äußerliche optische Veränderung der Bespannung zu vermeiden. Die Verbindung zwischen Aktuator und Transferelement kann beispielsweise bevorzugt durch Kleben, Schrauben, Klemmen, Nieten, Spannen, Schweißen oder Clipsen erfolgen.

Der Rahmen ist zweckmäßigerweise so steif ausgelegt, dass unter normalen Betriebsbedingungen stets die Freigängigkeit des Aktuators sichergestellt ist. Jedoch ist der Rahmen, beispielsweise durch ausgedünnte soll-Knick-Bereiche, zweckmäßigerweise so weich ausgeführt, dass er im Falle einer Überlast oder eines Crashs mittels elastischer und/oder plastischer Verformung komprimiert wird. Dadurch wird ein maximaler Schutz von Personen im Falle eines Unfalls sichergestellt.

Unter der gleichen Höhe bzw. im Wesentlichen gleichen Höhe der Anordnung der Aktuatoren wird vorzugsweise die Entfernung dieser Aktuatoren jeweils zu einer Basisfläche/-Ebene verstanden, auf welcher das Gestühl steht oder jeweils zu einer Sitzfläche des Gestühls verstanden. Insbesondere ist die im Wesentlichen gleiche Höhe im Sinne dieser Erfindung gegeben, wenn die genannte Entfernung der Aktuatoren zur Basisfläche-/Ebene bzw. zur Sitzfläche um nicht mehr als 10 cm voneinander abweicht. Zweckmäßigerweise wird als unter der Höhe eines Aktuators dessen Entfernung zur Basisfläche-/Ebene bzw. zur Sitzfläche verstanden.

### Bezugszeichen

- 1: erster Aktuator
- 2: zweiter Aktuator
- 3: Lehnfläche
- 4: Kopfstützfläche
- 5: gleiche Höhe
- 6: Bespannung
- 7: Transferelement
- 8: zusätzlicher Bassaktuator
- 9: Rahmen des Aktuators
- 10: Gelenke des Rahmens
- 11: Streben des Rahmens
- 12: Füllmaterial
- 13: Sitzfläche
- 14: Anschlussleitungen
- 15: Anbindungsfläche für Aktuator
- 16: Übergang der Dicke verschiedener Bereiche des Transferelements
- 17: Fläche des Transferelements, die an die Kontur der Bespannung angepasst ist
- 18: dünnerer Außenbereich des Transferelements
- 19: Rahmen unverformt
- 20: Rahmen verformt
- 21: Anordnung mehrerer Aktuatoren
- 22: Liege
- 23: nachgiebiger Bereich einer Strebe
- 24: steifer Bereich einer Strebe

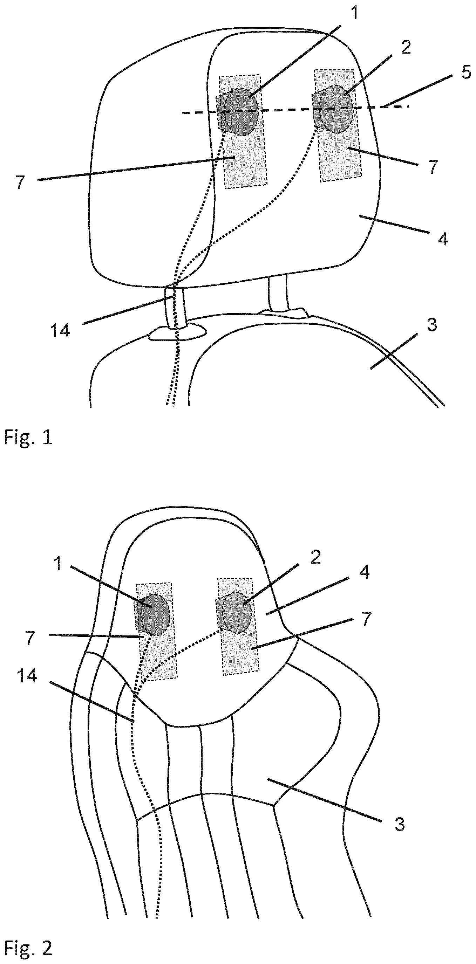

In Fig. 1 bis 5 sind in schematischer Darstellung Ausführungsbeispiele der Beschallungsanordnung bzw. des Gestühls veranschaulicht.

Fig. 1 zeigt beispielhaft eine Kopfstütze eines Gestühls mit eingebauten ersten und zweiten Aktuatoren 1, 2. Die Aktuatoren 1, 2 sind über speziell ausgeformte Transferelemente 7 direkt an die Innenseite der Bespannung der Kopfstützfläche 4 angebunden. Das System zur Schallerzeugung bzw. die Beschallungsanordnung ist von außen unsichtbar installiert. Dabei sind die Anschlussleitungen 14 ebenfalls unsichtbar durch die Streben der Kopfstütze geführt. Der ersten und zweite Aktuator 1, 2 sind im Wesentlichen auf gleicher Höhe 5 in der Kopfstütze bzw. an der Innenseite der Bespannung der Kopfstützfläche 4 angeordnet. Die Kopfstützfläche 4 des Gestühls ist oberhalb der Lehnfläche 3 des Gestühls angeordnet.

In Fig. 2 ist beispielgemäß eine Sitzschale eines Sessels oder eines Fahrzeugsitzes, als Gestühl, abgebildet, mit eingebautem ersten und zweiten Aktuator 1, 2. Das System zur Schallerzeugung bzw. die Beschallungsanordnung ist von außen unsichtbar installiert. Die Anschlussleitungen 14 werden unsichtbar durch das Innere der Sitzschale geführt. Beispielgemäß sind der erste und zweite Aktuator 1, 2 jeweils über Transferelemente 7 direkt mit der Innenseite der Bespannung der Kopfstützfläche 4 der Sitzschale verbunden. Der Übergang der Kopfstützfläche 4 zur Lehnfläche 3 erfolgt im Wesentlichen fließend bzw. ineinander übergehend bei dieser Ausbildung des Gestühls als Sitzschale.

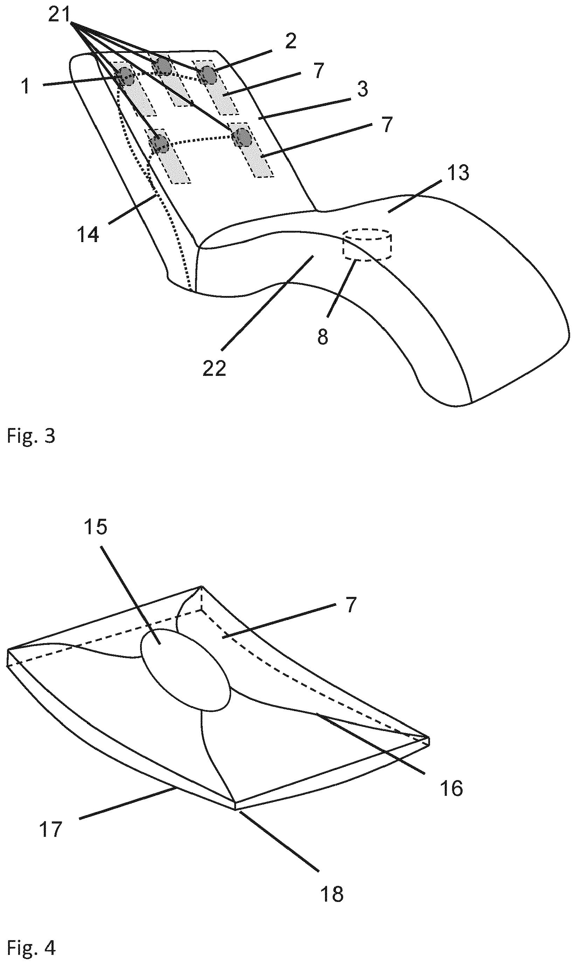

Anhand von Fig. 3 wird beispielhaft eine Liege 22 als Gestühl mit mehreren eingebauten Aktuatoren 21 veranschaulicht, um eine räumliche Schallabstrahlung, insbesondere immersiv, zu ermöglichen. Die Aktuatoren 21, dabei umfassend den ersten und zweiten Aktuator 1, 2 sind unsichtbar im Inneren der Liege eingebaut und so durch elastische Transferelemente 7 angebunden, dass sie von außen weder gesehen noch gespürt werden können. Die Aktuatoren 21 sind dabei hinter der Lehnfläche 3 des Gestühls angeordnet. Hinter der Sitzfläche 13 des Gestühls ist ein zusätzlicher Bassaktuator 8 angeordnet, als Teil der beispielhaften Beschallungsanordnung.

In Fig. 4 ist ein beispielhaftes Transferelement 7 veranschaulicht zur Übertragung der Schwingungen zwischen Aktuator und membranartiger Bespannung eines Sitzes, eines Stuhls oder einer Liege bzw. des Gestühls. Das Transferelement 7 erfüllt dabei die Funktion eines Impedanzwandlers zur idealen Übertragung der Schwingungen. Die Geometrie des Transferelements 7 ist zu seinen Seiten hin ausgedünnt 18 mit Übergängen 16 in Form von beispielhaft mathematischen Funktionen wie linearen, quadratischen oder exponentiellen Funktionen. Das an die Innenseite der Bespannung anzubindende Transferelement 7 ist an dieser Fläche geometrisch ideal an die Kontur der Bespannung angepasst. Durch die Materialwahl und eine Ausdünnung des Transferelementes wird eine vergleichbare Optik und Haptik der Umgebung um das Transferelement erzeugt. Das Transferelement 7 weist dabei im Wesentlichen zentral eine Anbindungsfläche 15 für den Aktuator auf, wobei die Fläche 17 des Transferelements, die an der Innenseite der Bespannung des Gestühls anliegt bzw. mit dieser verbunden ist, an die Kontur dieser Bespannung angepasst ist. Dabei weist das Transferelement 7 dünnere 18 und dickere Außenbereiche auf, wobei das Transferelement 7 hinsichtlich seiner Geometrie bezüglich der Übergangslinien 16 entsprechend bespielhaft den genannten mathematischen Funktionen genügend ausgebildet ist.

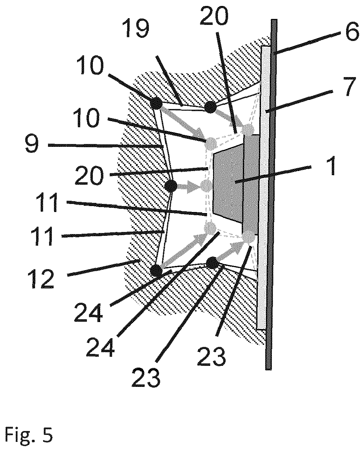

Fig. 5 zeigt beispielhaft eine Rahmenkonstruktion bzw. den Rahmen 9 zur Sicherstellung des rückseitigen Freiraums des ersten Aktuators 1, welcher mittels Transferelement 7 mit Bespannung 6 verbunden ist.

Der Rahmen 9 weist Streben 11 und Gelenke 10 auf, mittels welchen die Streben 11 beweglich sind bzw. der Rahmen verformbar ist. Hinter Rahmen 9 ist Füllmaterial 12, schraffiert dargestellt, der Kopfstütze bzw. des Sitzes bzw. Gestühls angeordnet.

Dabei ist in Fig. 5 ein unverformtes Beispiel des Rahmens 19 veranschaulicht und ebenfalls eine verformte bzw. gestauchte Veranschaulichung 20, mit schraffierten Streben veranschaulicht dargestellt. Die Pfeile zeigen dabei die Verformung hinsichtlich der Gelenke 10 des unverformten Rahmens 19 hin zu den Positionen der Gelenke 10 des verformten Rahmens 20. Die Streben 11 sind beispielhaft selbst verformbar ausgebildet und weisen dazu beispielgemäß jeweils wenigstens einen im Wesentlichen steifen Bereich 24 und zumindest einen nachgiebigen Bereich 23 auf, wobei diese Bereiche sich beispielgemäß durch ihre Querschnittsgeometrie unterscheiden. Rahmen 9 nimmt seinen gestauchten Zustand 20 beispielhaft ein, im Falle eines Crashs oder einer übermäßig starken Krafteinwirkung, wodurch sich der Rahmen plastisch verformt und so den Schutz von Personen sicherstellt, insbesondere den Schutz des Kopfes einer Person, welcher mit der Bespannung kollidiert bzw. kollidieren kann.

## Patentansprüche

1. Beschallungsanordnung, aufweisend ein Gestühl, das eine Lehnfläche (3) und eine Kopfstützfläche (4) aufweist, wobei die Beschallungsanordnung wenigstens einen ersten und einen zweiten Aktuator (1, 2) zur Schwingungsanregung aufweist, wobei jeder der beiden Aktuatoren (1, 2) in dem Gestühl angeordnet ist, so dass der erste und der zweite Aktuator (1, 2) jeweils mit seiner Anregefläche an der Innenseite einer Bespannung (6) der Kopfstützfläche (4) oder der Innenseite einer Bespannung der Lehnfläche (3) auf im Wesentlichen gleicher Höhe (5) angeordnet ist.

2. Beschallungsanordnung nach Anspruch 1, **dadurch gekennzeichnet, dass** die Anregefläche direkt an der Bespannung (6) positioniert und/oder direkt mit dieser verbunden ist.

3. Beschallungsanordnung nach Anspruch 1, **dadurch gekennzeichnet, dass** die Anregefläche mittels eines dazwischen angeordneten Transferelements (7) an der Bespannung (6) positioniert ist und/oder mit der Bespannung (6) verbunden ist.

4. Beschallungsanordnung nach einem der vorhergehenden Ansprüche, **dadurch gekennzeichnet, dass** die Aktuatoren (1, 2) jeweils im Wesentlichen normal zur Bespannungsfläche (6) ausgerichtet angeordnet sind, wobei die Bespannungsfläche insbesondere gewölbt ausgebildet ist.

5. Beschallungsanordnung nach einem der vorhergehenden Ansprüche, **dadurch gekennzeichnet, dass** das Gestühl einen zusätzlichen Bassaktuator (8) aufweist, insbesondere ausgebildet zur Wiedergabe/Anregung von Frequenzen im Wesentlichen kleiner als 200Hz und dieser zusätzliche Bassaktuator an der Innenseite der Bespannung der Lehnfläche (3) oder an der Innenseite der Bespannung einer Sitzfläche (13) oder an der Gestühlstruktur im Bereich der Sitzfläche (13) oder Lehnfläche (3) angeordnet ist.

6. Beschallungsanordnung nach einem der vorhergehenden Ansprüche, **dadurch gekennzeichnet, dass** die Aktuatoren (1, 2) jeweils an ihrer der Anregefläche abgewandten Rückseite einen offenen Rahmen (9) aufweisen, welcher den Aktuator beabstandet umschließt und rückseitig überragt, und welcher biegsam und/oder verformbar (23) ausgebildet ist und/oder Gelenke (10) aufweist.

7. Beschallungsanordnung nach Anspruch 6, **dadurch gekennzeichnet, dass** der Rahmen (9) aus Streben (11) ausgebildet ist und in Richtung normal zur Anregefläche verformbar ausgebildet ist und außerdem senkrecht dazu ebenfalls verformbar ausgebildet ist.

8. Beschallungsanordnung nach einem der vorhergehenden Ansprüche, **dadurch gekennzeichnet, dass** die Aktuatoren (1, 2) jeweils, insbesondere jeweils den Rahmen (9) aufweisend, in einem flexiblen Füllmaterial (12), insbesondere ein Kunststoffschaum, in dem Gestühl gelagert/ locker gelagert sind und jeweils vorne, auf Seiten der Anregefläche des Aktuators (1, 2) mit dem Transferelement (7) und/oder mit der Bespannung (6) verbunden sind.

9. Beschallungsanordnung nach einem der vorhergehenden Ansprüche, **dadurch gekennzeichnet, dass** der erste und der zweite Aktuator (1, 2) ausgebildet sind, dass der Aktuator seine Anregefläche und damit einen verbundenen Körper zu Schwingungen seiner Körperstruktur anregt bzw. anregen kann, wodurch der von Luft zumindest teilweise umgebene Körper Schallwellen emittiert.
